# EUROPÄISCHE PATENTSCHRIFT

(11) **EP 4 653 303 B1**
(45) Veröffentlichungstag und Bekanntmachung des Hinweises auf die Patenterteilung: **25.11.2026**
(21) Anmeldenummer: 25177888.2
(22) Anmeldetag: 21.05.2025
(51) Int. Cl.: B62K 15/00, B62K 21/16

(54) **SCHWENKBARER LENKERVORBAU MIT GENEIGTER SCHWENKACHSE**
PIVOTABLE HANDLEBAR STEM WITH TILTED PIVOT AXIS
POTENCE DE GUIDON PIVOTANTE À AXE DE PIVOTEMENT INCLINÉ

(30) Priorität: 22.05.2024 DE 202024102623 U
(43) Veröffentlichungstag der Anmeldung: 26.11.2025
(73) Patentinhaber: Rocker Parts GmbH, 79206 Breisach am Rhein (DE)
(72) Erfinder: Tischer, Martin, 79206 Breisach am Rhein (DE)
(74) Vertreter: Weisse, Moltmann & Willems PartGmbB

(56) Entgegenhaltungen:
- DE-U1- 202023 104 401
- GB-A- 2 596 827
- US-A1- 2015 050 073
- US-A1- 2021 171 150

## Beschreibung

### Technisches Gebiet

Die Erfindung betrifft einen Lenkervorbau, insbesondere für ein Fahrrad, aufweisend wenigstens eine an einem Gabelschaft des Fahrrads festklemmbare Schaftklemmeinheit, wenigstens eine an einem Lenker des Fahrrads festklemmbare Lenkerklemmeinheit, und wenigstens einen Schwenkmechanismus, mittels dem die Lenkerklemmeinheit um eine Schwenkachse zwischen einer Lenkstellung und einer Parkstellung verschwenkbar mit der Schaftklemmeinheit verbunden ist.

### Beschreibung

Ein Lenkervorbau dient insbesondere zum Verbinden eines Fahrradlenkers mit einer Fahrradgabel. Hierzu wird der Lenkervorbau über eine Klemmverbindung drehfest mit einem Gabelschaft der Federgabel und über eine weitere Klemmverbindung drehfest mit dem Fahrradlenker verbunden. In der Regel ist der Fahrradlenker mittels des Lenkervorbau frontseitig versetzt zu dem Gabelschaft angeordnet.

Für einen Transport oder eine Lagerung eines Fahrrads ist es von Vorteil, wenn der Fahrradlenker aus seiner Lenkstellung, in der der Fahrradlenker zum üblichen Lenken des Fahrrads verwendbar ist, relativ zu der Fahrradgabel um 90° in eine Parkstellung gedreht werden kann, da das Fahrrad dann deutlich platzsparender ausgebildet ist. Dieser Vorteil spielt insbesondere im Zusammenhang mit Mountainbikes und Fahrrädern mit ähnlich großem Lenker eine nicht unwesentliche Rolle.

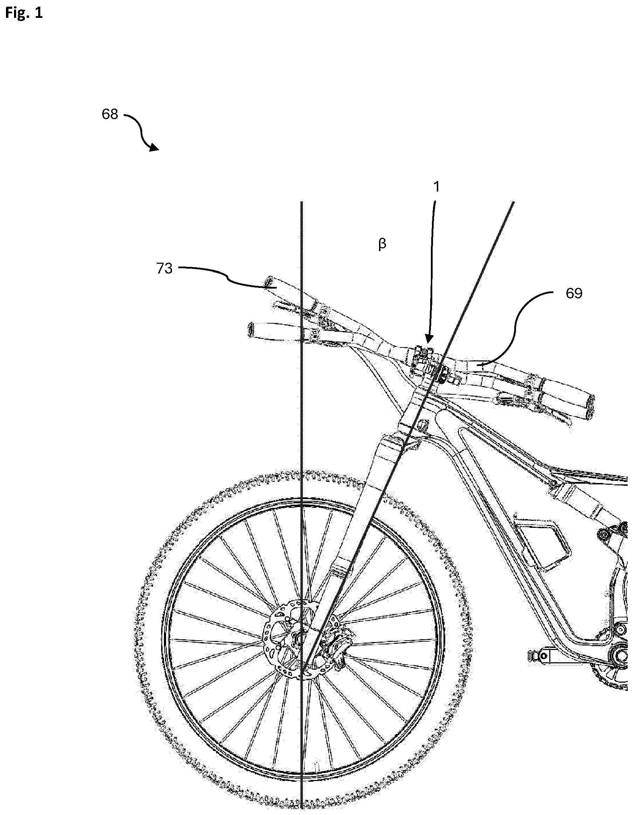

Es versteht sich, dass der Begriff "Fahrrad" eine Vielzahl verschiedener Typen umfasst. Dazu zählen beispielsweise elektrische Fahrräder (E-Bikes), die zusätzliche motorisierte Unterstützung bieten, Rennräder, Mountainbikes, Gravelbikes, Lastenräder für den Transport, und Trekkingbikes. Diese Aufzählung ist nicht abschließend und soll nicht auf diese beschränkt werden
Fahrräder weisen aufgrund ihrer Geometrie zwangsläufig einen Lenkwinkel (oder Gabelwinkel) auf. Der Lenkwinkel beschreibt vorzugsweise den Winkel zwischen einer Senkrechten und der Achse des Gabelschafts (vgl. Fig. 1). Der Lenkwinkel bzw. ein nach hinten gekippter Gabelschaft führt dazu, dass ein Lenker beim Überführen in eine Parkstellung mit einem schwenkbaren Lenkervorbau nachteilig nach vorne ansteigt.

### Stand der Technik

Die Druckschriften DE 202023104397 U1 und DE 202023104401 U1 offenbaren einen Lenkervorbau für ein Fahrrad, der werkzeuglos aus einer Lenkstellung in eine Parkstellung (und umgekehrt) verschwenkbar ist. Dabei weist der Lenkervorbau eine an einem Gabelschaft des Fahrrads festklemmbare Schaftklemmeinheit und eine an einem Lenker des Fahrrads festklemmbare Lenkerklemmeinheit auf. Die Schaftklemmeinheit und die Lenkerklemmeinheit sind über eine vertikale Schwenkachse verschwenkbar miteinander verbunden. Die Schwenkachse ist zudem seitlich zu einer bezüglich einer Höhenrichtung des Lenkervorbaus gegebenen vertikalen Längsmittelebene des Lenkervorbaus angeordnet.

### Offenbarung der Erfindung

Die Aufgabe der Erfindung war es die Nachteile des Standes der Technik zu beseitigen und insbesondere einen verbesserten schwenkbaren Lenkervorbau bereitzustellen, wobei ein Ansteigen des Lenkers bei dem Überführen von einer Lenkstellung in eine Parkstellung verhindert oder zumindest reduziert wird.

Die erfindungsgemäße Aufgabe wird gelöst durch die Merkmale des unabhängigen Anspruchs. Vorteilhafte Ausgestaltungen der Erfindung sind in den abhängigen Ansprüchen beschrieben.

Erfindungsgemäß wird die Aufgabe ferner insbesondere dadurch gelöst, dass ein Lenkervorbau der eingangs genannten Art eine Schwenkachse umfasst, die gegenüber einer Längsmittelachse einer Schaftklemmbohrung der Schaftklemmeinheit in Richtung einer Lenkeraufnahmeöffnung der Lenkerklemmeinheit geneigt ausgebildet ist.

Der Vorteil des erfindungsgemäßen Lenkervorbaus ist vor allem darin zu sehen, dass ein Ansteigen des Lenkers von der Überführung aus der Lenkstellung des Lenkers in die Parkstellung vermieden wird. Insoweit ist ein Fahrrad in Parkposition durch den erfindungsgemäßen Lenkervorbau kompakter ausgestaltet. Durch die Neigung der Schwenkachse kann zudem die Bewegung des Lenkers beim Schwenken in die Parkstellung verbessert werden.

Die vorliegende Erfindung stellt eine Abkehr von den herkömmlichen Lenkervorbauten dar, wie sie im Stand der Technik bekannt sind. Bei diesen bekannten Lenkervorbauten ist die Schwenkachse in der Regel vertikal ausgerichtet, was dazu führt, dass der Lenker ansteigt, wenn er in die Parkposition überführt wird.

Der erfindungsgemäße Lenkervorbau eignet sich insbesondere für ein Fahrrad. Die vorliegende Erfindung soll jedoch nicht auf die Verwendung bei einem Fahrrad eingeschränkt sein. Stattdessen ist es ebenso möglich, den erfindungsgemäßen Lenkervorbau bei einem anderweitigen Fahrzeug mit Lenker einzusetzen.

Die Schaftklemmeinheit kann beispielsweise nach Art einer Rohrschelle an dem Gabelschaft des Fahrrads festgeklemmt werden. Die Schaftklemmeinheit weist hierzu eine durchgehende, insbesondere kreiszylinderförmig ausgebildete, Schaftklemmbohrung auf, durch die ein Abschnitt des Gabelschafts hindurchgeführt werden kann. Die Schaftklemmeinheit kann heckseitig zwei freie Verbindungsabschnitte aufweisen, die über wenigstens eine Schraube miteinander verbunden sind, wobei das Festklemmen der Schaftklemmeinheit an dem Gabelschaft über ein Anziehen der Schraube erreicht werden kann. Die Schaftklemmeinheit kann teilweise oder vollständig aus einem Metall oder einer Metalllegierung hergestellt sein.

Die Lenkerklemmeinheit kann unbeweglich oder höhenverstellbar mit der Schaftklemmeinheit verbunden sein. Eine Höhenverstellung der Lenkerklemmeinheit ermöglicht es, die Höhe eines an der Lenkerklemmeinheit angeordneten Lenkers je nach Wunsch zu variieren. Die Lenkerklemmeinheit weist eine, insbesondere kreiszylinderförmig ausgebildete, Lenkerklemmbohrung auf, durch die ein Abschnitt eines an dem Vorbau angeordneten Lenkers hindurchgeführt werden kann. Die Lenkerklemmbohrung ist im Sinne der Erfindung auch als eine Lenkeraufnahmeöffnung anzusehen. Hierbei kann die Lenkerklemmeinheit wenigstens ein Basisteil und wenigstens ein mit dem Basisteil verbundenes Klemmteil aufweisen, zwischen denen die Lenkerklemmbohrung bzw. die Lenkeraufnahmeöffnung ausgebildet ist, wobei das Klemmteil über wenigstens eine Schraube mit dem Basisteil verbunden sein kann. Die Lenkerklemmeinheit kann teilweise oder vollständig aus einem Metall oder einer Metalllegierung hergestellt sein.

Im Allgemeinen ist ein Schwenkmechanismus ein Vorrichtungselement, das zwei oder mehr Teile so miteinander verbindet, dass sie sich um eine gemeinsame Achse drehen können. Im spezifischen Kontext des vorgeschlagenen Lenkervorbaus erlaubt der Schwenkmechanismus die Rotation der der Lenkerklemmeinheit um eine Schwenkachse, die mit der Schaftklemmeinheit verbunden ist (oder aber auch die Rotation der Schaftklemmeinheit um eine Schwenkachse, die mit der Lenkerklemmeinheit verbunden ist). Dies ermöglicht es, den Lenker von einer aktiven Lenkstellung in eine kompaktere Parkstellung zu bewegen. Der Mechanismus kann darüber hinaus über verschiedene technische Lösungen realisiert werden, einschließlich, aber nicht beschränkt auf Scharniere, Drehgelenke oder Konfigurationen, die auf spezifische Anforderungen zugeschnitten sind.

Vorzugsweise bezieht sich die Längsmittelachse im Sinne der Erfindung auf eine gerade oder vertikale Linie, die durch das Zentrum der Schaftklemmbohrung verläuft. Die Längsmittelachse weist im Wesentlichen die gleiche Richtung auf, wie der Gabelschaft (bzw. dessen Längsachse), der in die Schaftklemmbohrung aufgenommen wird.

Bevorzugt sind die Längsmittelachse und die Schwenkachse windschief zueinander ausgebildet.

Weiterhin bevorzugt dient die Schaftklemmbohrung dazu, einen zylindrischen Gabelschaft sicher in dem Lenkervorbau zu befestigen. Die Bohrung ist so gestaltet, dass sie eine präzise Passform um den Schaft bietet, wobei sie vorzugsweise mit einer Klemmvorrichtung versehen ist, um den eingeführten Schaft fest und sicher zu fixieren. Die Schaftklemmbohrung ist Teil einer Schaftklemmeinheit.

Wie bereits erläutert, ist die Lenkerklemmeinheit gegenüber der Schaftklemmeinheit schwenkbar ausgebildet. Dabei ist die Schwenkachse, um die die Lenkerklemmeinheit gegenüber der Schaftklemmeinheit verschwenkt wird, geneigt ausgebildet. Die Neigung der Schwenkachse dient insbesondere dazu, den Lenkwinkel, den ein Fahrrad aufgrund seiner Geometrie aufweist, auszugleichen und damit ein Anheben des Lenkers beim Überführen in eine Parkstellung zu verringern.

Ausgehend von einer vertikal ausgerichteten Schwenkachse ist vorzugsweise der untere Punkt (der dem Erdmittelpunkt nähere Punkt) der Schwenkachse fixiert, während der obere Punkt in Fahrtrichtung oder in Richtung der Lenkeraufnahmeöffnung nach vorne verschoben ausgebildet ist, sodass die Schwenkachse (gegenüber ihrer ursprünglichen vertikalen Position) geneigt ist.

Die Schwenkachse kann insoweit bezüglich einer Höhenrichtung des Lenkervorbaus gegebenen vertikalen Querebene des Lenkervorbaus geneigt ausgebildet sein, sodass die Schwenkachse und die Querebene sich in einem Punkt schneiden. Die Schwenkachse ist dabei in Richtung der Fahrtrichtung oder Front eines Fahrrads geneigt, dies entspricht auch einer Neigung in Richtung einer Lenkeraufnahmeöffnung des Lenkervorbaus.

Zudem kann auch eine (gedachte) Verlängerung der Schwenkachse und eine (gedachte) Querebene, in welcher die Längsmittelachse eingebettet ist, einen Schnittpunkt aufweisen.

In einer bevorzugten Ausführungsform ist die Schwenkachse im Wesentlichen parallel zu einer bezüglich einer Höhenrichtung des Lenkervorbaus gegebenen vertikalen Längsmittelebene des Lenkervorbaus angeordnet. Die parallele Anordnung der Schwenkachse zur vertikalen Längsmittelebene des Lenkervorbaus sorgt für eine symmetrische und ausgewogene Schwenkbewegung.

In einer alternativen Ausführungsform kann die Schwenkachse allerdings auch in der vertikalen Längsmittelebene des Lenkervorbaus eingebettet sein oder diese schneiden.

Die vertikale Längsmittelebene des Lenkervorbaus verläuft in Längsrichtung des Lenkervorbaus, und zwar bezüglich einer Breitenrichtung des Lenkervorbaus mittig durch den Lenkervorbau. Zudem erstreckt sich die vertikale Längsmittelebene des Lenkervorbaus in die Höhenrichtung des Lenkervorbaus. Die vertikale Längsmittelebene teilt den Lenkervorbau dementsprechend in zwei Hälften. Eine erste Hälfte liegt in der Draufsicht auf den Lenkervorbau auf einer linken Seite der Längsmittelebene, während eine zweite Hälfte in der Draufsicht auf den Lenkervorbau auf einer rechten Seite der Längsmittelebene liegt. Die Schwenkachse befindet sich vorzugsweise in der zweiten Hälfte des Lenkervorbaus auf der rechten Seite der Längsmittelebene. Es versteht sich, dass bei dieser Annahme der Lenkervorbau in der Draufsicht so ausgerichtet ist, dass sich die Lenkeraufnahmeöffnung oben im Bild der Draufsicht und das hintere Ende der Schaftklemmeinheit unten im Bild der Draufsicht befindet.

Bevorzugt weist die Schwenkachse eine Neigung von α = 3° bis α = 30° auf, stärker bevorzugt eine Neigung von α = 5° bis α = 20°, besonders stark bevorzugt eine Neigung von α = 8° bis α = 15°, insbesondere eine Neigung von α = 10°. Die definierte Neigung der Schwenkachse ermöglicht einen Ausgleich des Lenkwinkels. Die ausgewählten Neigungswinkel tragen dazu bei, dass der Lenker in der Parkstellung weniger Platz beansprucht und gleichzeitig die Handhabung des Fahrrads erleichtert wird.

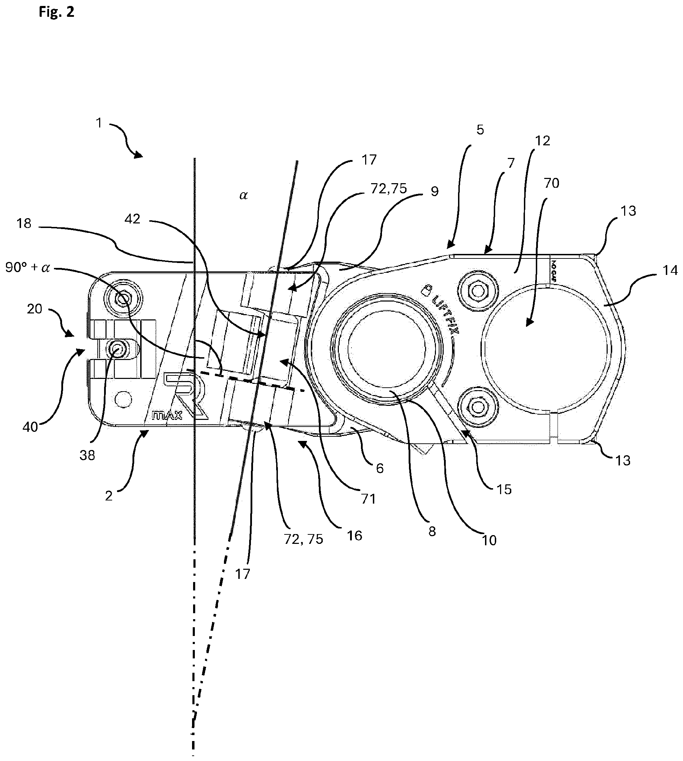

Die Schwenkachse und die Längsmittelachse der Schaftklemmbohrung schließen dabei insbesondere den Neigungswinkel α ein, wenn sie auf eine seitlich des Lenkervorbaus angeordnete Fläche projiziert werden. Die seitlich des Lenkervorbaus angeordnete Fläche ist dabei vorzugsweise parallel zur Längsmittelebene angeordnet. Eine solche Projektion ist in Fig. 2 zu sehen.

Der Neigungswinkel α kann dabei abhängig vom Lenkwinkel des Fahrrads sein und/oder speziell auf diesen abgestimmt sein. Ziel des Neigungswinkels ist es insbesondere den Lenkwinkel auszugleichen, wenn ein Lenker über den vorgeschlagenen Lenkervorbau aus einer Lenkstellung in eine Parkstellung überführt wird. Vorzugsweise Insofern entspricht der Neigungswinkel bevorzugt im Wesentlichen dem Betrag her dem Lenkwinkel.

In einer weiteren bevorzugten Ausführungsform des Lenkervorbaus ist die Schwenkachse so konstruiert, dass ihre Neigung variabel einstellbar ist. Diese Flexibilität in der Einstellung der Neigung kann über eine Mechanik realisiert werden, die es dem Nutzer erlaubt, die Neigung der Schwenkachse leicht zu verändern, um so eine ideale Positionierung des Lenkers sowohl in der Lenk- als auch in der Parkstellung zu gewährleisten. Die variabel einstellbare Schwenkachse ermöglicht die Verwendung des vorgeschlagenen Lenkervorbaus für verschiedene Fahrräder, da der Lenkervorbau auf jeden Lenkwinkel individuell eingestellt werden kann.

Alternativ kann die Schwenkachse auch so ausgebildet sein, dass sie starr ist und nicht weiter verändert werden kann.

In einer weiteren bevorzugten Ausführungsform ist der Schwenkmechanismus derart ausgebildet, dass die Schwenkachse in zwei voneinander beabstandete Bohrungen der Lenkklemmeinheit und einer zwischen den Bohrungen angeordneten Hülse der Schaftklemmeinheit aufgenommen und mit zwei Befestigungsschrauben verschraubt wird, wobei die Neigung der Schwenkachse durch die Formgebung und Ausrichtungen der Bohrungen sowie der Hülse definiert wird. Die Verwendung von zwei Befestigungsschrauben in Verbindung mit den Bohrungen und der Hülse sorgt für eine robuste und sichere Verbindung zwischen der Lenker- und der Schaftklemmeinheit. Dadurch dass die Neigung der Schwenkachse durch die Formgebung und Ausrichtung der Bohrungen sowie der Hülse definiert wird, wird eine präzise und reproduzierbare Herstellung des Schwenkmechanismus ermöglicht.

Bevorzugt ist die geneigte Schwenkachse von einer Höhenverstellung des Lenkers über eine Verstellachse entkoppelt, sodass der Lenker relativ zur Schwenkachse positionierbar bzw. bewegbar ist. Die räumliche Lage der Schwenkachse verändert sich bei der Höhenverstellung nicht.

Zur Höhenverstellung weist die Lenkerklemmeinheit vorzugsweise einen Rotationsmechanismus auf, der ein Lenkerklemmteil relativ zu einem Basisteil drehbar lagert. Die durch diesen Mechanismus definierte Rotationsachse bildet die Verstellachse zur Einstellung der Lenkerhöhe. Sie verläuft in Lenkstellung bzw. Fahrposition vorzugsweise horizontal und steht im Wesentlichen senkrecht zur Längsmittelachse der Schaftklemmbohrung der Schaftklemmeinheit.

Das Basisteil der Lenkerklemmeinheit ist über den Schwenkmechanismus über die geneigte Schwenkachse mit der Schaftklemmeinheit verbunden, wobei die Schwenkachse als Verbindungselement zwischen beiden Klemmeinheiten ausgebildet ist. Sie stellt eine von der Höhenverstellung funktional unabhängige Drehachse dar. Im Unterschied zu bekannten Konstruktionen, bei denen die Schwenkachse innerhalb der Lenkerklemmeinheit angeordnet ist und sich infolge einer Höhenverstellung mitverlagert, bleibt sie in der vorliegenden Ausführung ortsfest. Dies ermöglicht eine konstant präzise und reproduzierbare Schwenkbewegung zwischen Lenk- und Parkstellung, ohne dass sich dadurch die Bewegungsgeometrie oder Arretierqualität verändert.

Zudem erlaubt die Entkopplung eine Anordnung der Schwenkachse nahe am Gabelschaft, was eine kompaktere Bauweise des Lenkervorbaus begünstigt. Gleichzeitig verbessert die näher am Zentrum des Fahrrads positionierte Schwenkachse die Kraft- und Momentenverteilung im Schwenkmechanismus, wodurch die mechanische Belastbarkeit und Dauerfestigkeit des Systems insgesamt erhöht wird.

Ferner betrifft die vorliegende Anmeldung auch ein Fahrrad als solches, das mit einem Lenkervorbau gemäß einer der zuvor beschriebenen Ausführungsformen ausgestattet ist. Das Fahrrad umfasst vorzugsweise einen Rahmen, einen Gabelschaft, der drehbar in einer Steuerrohraufnahme des Rahmens gelagert ist, sowie einen Lenker zur manuellen Steuerung der Fahrtrichtung. Der Lenkervorbau ist dabei bevorzugt funktional zwischen dem Gabelschaft und dem Lenker angeordnet und dient zur Übertragung von Lenkkräften auf den Gabelschaft. Durch den Einsatz eines solchen Lenkervorbaus kann das Fahrrad insbesondere in der Parkstellung eine reduzierte Breite oder Bauhöhe aufweisen, was die Abstellbarkeit, Transportfähigkeit und Lagerung verbessert.

Weiterhin wird ein Verfahren zum Überführen eines Fahrrads von einer Fahrstellung in eine Parkstellung offenbart. Das Verfahren kann insbesondere die folgenden Schritte umfassen: Zunächst erfolgt das Lösen eines Schnellspannhebels. Anschließend wird der Lenker um eine geneigte Schwenkachse aus einer Lenkstellung in eine Parkstellung verschwenkt. Abschließend wird der Schnellspannhebel wieder festgestellt, um den Lenker in der Parkstellung zu fixieren. Weitere Ausführungsbeispiele sind nachstehend unter Bezugnahme auf die beigefügten Zeichnungen näher erläutert.

### Kurze Beschreibung der Zeichnung

- Fig. 1: zeigt eine schematische Seitenansicht eines Fahrrads.
- Fig. 2: zeigt eine schematische Seitenansicht einer bevorzugten Ausführungsform des erfindungsgemäßen Lenkervorbaus.
- Fig. 3: zeigt eine schematische und perspektivische Darstellung einer bevorzugten Ausführungsform für einen erfindungsgemäßen Lenkervorbau.

### Bevorzugte Ausführungsbeispiele

**Fig.** 1 illustriert eine schematische Seitenansicht eines Fahrrads **68.** Die schematische Darstellung stellt insbesondere einen Lenker **73,** der mit einem aus dem Stand der Technik bekannten Lenkervorbau **1** versehen ist, einem Lenker **69** gegenüber, der mit einem erfindungsgemäßen Lenkervorbau **1** versehen ist.

Der Lenkervorbau **1** dient als Verbindungselement zwischen dem Lenker **69, 73** und dem Gabelschaft des Fahrrads **68.** Über den Lenkervorbau **1** lässt sich der Lenker **69, 73** aus einer Lenkstellung in eine Parkstellung verschwenken (und umgekehrt). In der Parkstellung nimmt das Fahrrad **68** gegenüber der Lenkstellung weniger Platz ein und eignet sich besser für die Verstauung, beispielsweise während eines Transports. Die in **Fig. 1** dargestellten Lenker **69, 73** sind in der Parkstellung gezeigt.

Ein Fahrrad **68** weist aufgrund seiner Geometrie einen Lenkwinkel β auf. Der Lenkwinkel beschreibt dabei einen Winkel zwischen einer Senkrechten und der Längsachse des Gabelschafts. Der Lenkwinkel führt dazu, dass ein Lenker **69** mit einem aus dem Stand der Technik bekannten Lenkervorbau **1** beim Überführen aus einer Lenkstellung in eine Parkstellung nachteilig nach vorne ansteigt.

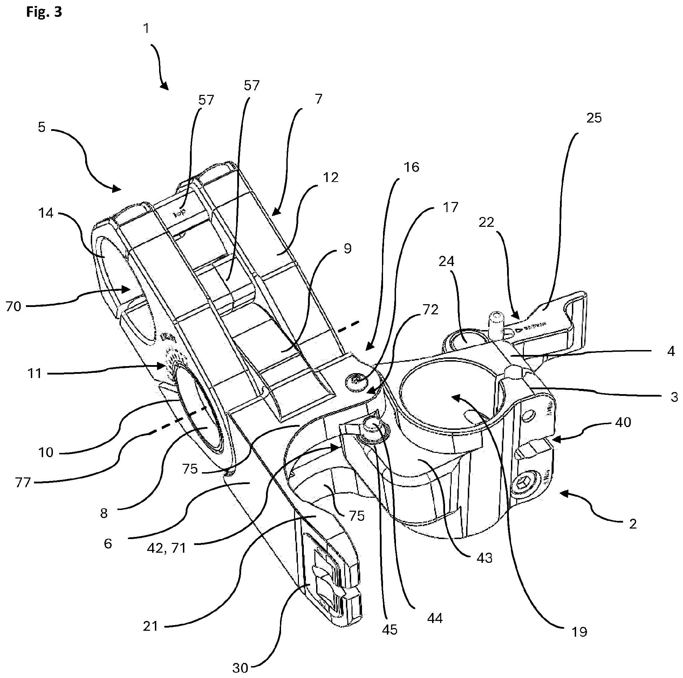

**Fig. 2** zeigt eine schematische Seitenansicht einer bevorzugten Ausführungsform des erfindungsgemäßen Lenkervorbaus **1,** während **Fig. 3** eine perspektivische und schematische Ansicht derselben Ausführungsform des Lenkervorbaus **1** von schräg oben zeigt. Da sich sowohl **Fig. 2** als auch **Fig. 3** auf dieselbe Ausführungsform des erfindungsgemäßen Lenkervorbaus **1** beziehen, werden insoweit in beiden Figuren dieselben Bezugszeichen verwendet.

Der Lenkervorbau **1** umfasst insbesondere eine an einem Gabelschaft des Fahrrads **68** festklemmbare Schaftklemmeinheit **2** und eine an einem Lenker **69** des Fahrrads **68** festklemmbare Lenkerklemmeinheit **5.** Darüber hinaus weist der Lenkervorbau **1** einen Schwenkmechanismus **16** auf, mittels dem die Lenkerklemmeinheit **5** um eine Schwenkachse **42** zwischen einer Lenkstellung und einer Parkstellung verschwenkbar mit der Schaftklemmeinheit **2** verbunden ist.

Die Schwenkachse **42** ist dabei gegenüber einer Längsmittelachse **18** einer Schaftklemmbohrung **19** der Schaftklemmeinheit **2** in Richtung einer Lenkeraufnahmeöffnung **70** (bzw. Lenkerklemmbohrung) der Lenkerklemmeinheit **5** geneigt ausgebildet (Der Übersicht halber ist die Längsmittelachse **18** der Schaftklemmbohrung **19** nicht in **Fig. 3** dargestellt).

Die Schwenkachse **42** und die Längsmittelachse **18** der Schaftklemmbohrung **19** schließen einen Neigungswinkel α ein, wenn sie auf eine seitlich des Lenkervorbaus 1 angeordnete Fläche projiziert werden, wie es in **Fig.2** der Fall ist.

Die Schwenkachse **42** ist ferner im Wesentlichen parallel zu einer bezüglich einer Höhenrichtung des Lenkervorbaus **1** gegebenen vertikalen Längsmittelebene des Lenkervorbaus **1** angeordnet. Die vertikale Längsmittelebene des Lenkervorbaus **1** verläuft in Längsrichtung des Lenkervorbaus **1,** und zwar bezüglich einer Breitenrichtung des Lenkervorbaus **1** mittig durch den Lenkervorbau **1.** Zudem erstreckt sich die vertikale Längsmittelebene des Lenkervorbaus **1** in die Höhenrichtung des Lenkervorbaus **1.**

Die Schwenkachse **42** weist insbesondere eine Neigung von α = 10° auf.

Der Schwenkmechanismus **16** ist derart ausgebildet, dass die Schwenkachse **42** in zwei voneinander beabstandete Bohrungen **72** der Lenkerklemmeinheit **5** und einer zwischen den Bohrungen **72** angeordneten Hülse **71** der Schaftklemmeinheit **2** aufgenommen und mit zwei Befestigungsschrauben **17** verschraubt wird. Die Neigung der Schwenkachse **42** wird dabei durch die Formgebung und Ausrichtungen der Bohrungen **72** sowie der Hülse **71** definiert.

In diesem Zusammenhang weist die Schaftklemmeinheit **2** beispielsweise einen Haltevorsprung **43** auf, der in einem Winkel von 90° + α relativ zur Längsmittelachse **18** ausgerichtet ist, insbesondere wenn die Schaftklemmeinheit 2 und der Haltevorsprung **43** auf eine seitlich des Lenkervorbaus angeordnete Fläche projiziert werden.

Die Hülse **71** wird vorzugsweise durch eine im Haltevorsprung **43** angeordnete Bohrung bereitgestellt, deren Bohrungsachse senkrecht zur Ober- und Unterseite des Haltevorsprungs **43** verläuft. Die Ober- und Unterseite bezeichnen dabei gegenüberliegende Flächen des Haltevorsprungs **43,** zwischen denen sich die Bohrung erstreckt, unabhängig davon, wie der Haltevorsprung **43** im Raum geneigt ist.

Die Bohrungen **72** der Lenkerklemmeinheit **5** sind demgegenüber jeweils in zwei voneinander beabstandeten Schenkel **75** der Lenkerklemmeinheit **5** angeordnet, deren gegenüberliegende Innenflächen parallel zueinander sowie parallel zur Ober- und Unterseite des Haltevorsprungs **43** verlaufen. Die Bohrungsachsen der Bohrungen **72** verlaufen dabei senkrecht zu den Seitenflächen der Schenkel **75.**

Wird eine Schwenkachse **42** bzw. Bolzen oder ein entsprechender Lagerstift durch die Hülse **71** sowie die gegenüberliegenden Bohrungen **72** der Schenkel **75** geführt und über seine Stirnseiten mit Schrauben **17** an den Schenkeln **75** fixiert, so ergibt sich daraus ein scharnierartiges Lager. Dieses ermöglicht eine drehbare Lagerung der Lenkerklemmeinheit **5** relativ zur Schaftklemmeinheit **2** um die geneigte Schwenkachse **42.**

Die Lenkerklemmeinheit **5** und die Schaftklemmeinheit **2** sind vorzugsweise als zwei separate Baugruppen ausgebildet sind, die über den Schwenkmechanismus **16** miteinander gekoppelt sind, wobei die Lenkerklemmeinheit **5** eine Verstellachse **77** zur Höhenverstellung des Lenkers **69** umfasst.

Die Lenkerklemmeinheit **5** weist dabei ein Basisteil **6** und zwei höhenverstellbar mit dem Basisteil **6** verbundene, im Wesentlichen gleich ausgebildete Lenkerklemmteile **7** auf, die über zwei Verbindungsstege **57** miteinander verbunden sind. Für die Höhenverstellbarkeit weist das Basisteil **6** für jedes Lenkerklemmteil **7** einen eigenen hohlzylinderförmig ausgebildeten Stutzen **8** auf, die koaxial zueinander angeordnet sind und mit einem gemeinsamen mittleren Vorsprung **9** des Basisteils **6** verbunden sind. Jedes Lenkerklemmteil **7** weist eine kreiszylinderförmig ausgebildete Durchbrechung **10** auf, über die das jeweilige Lenkerklemmteil **7** auf den jeweiligen Stutzen **8** aufgesteckt ist. Zum Zwecke der Höhenverstellung ist auf der Außenseite des in **Fig. 3** im Vordergrund gezeigten Klemmteils **7** eine Höhenverstellungsskala **11** angeordnet.

Mit anderen Worten: Zur Höhenverstellung weist die Lenkerklemmeinheit **5** vorzugsweise einen Rotationsmechanismus auf, der ein Lenkerklemmteil **7** relativ zu dem Basisteil 6 drehbar lagert. Die durch diesen Mechanismus definierte Rotationsachse bildet die Verstellachse **77** zur Einstellung der Lenkerhöhe. Sie verläuft vorzugsweise horizontal und steht im Wesentlichen senkrecht zur Längsmittelachse **18** der Schaftklemmbohrung der Schaftklemmeinheit **2.**

Jedes Lenkerteil **7** weist ein mit dem jeweiligen Stutzen **8** verbundenes Basisteil **12** und ein mit einem freien Ende des Basisteils **12** über zwei Schrauben **13** verbundenes Klemmteil **14** auf, wobei die Schrauben **13** in Gewindebohrungen an dem Basisteil **12** eingeschraubt sind. Das jeweilige Basisteil **12** weist einen annähernd radial zu dem jeweiligen Stutzen **8** verlaufenden Klemmspalt **15** auf, wobei an dem jeweiligen Basisteil **12** eine Schraube angeordnet ist, mit der der Klemmspalt **15** unter Aufbringung einer Klemmkraft auf den Stutzen **8** verringerbar ist.

Darüber hinaus weist der Lenkervorbau 1 einen Arretiermechanismus **20** auf, mittels dem die Lenkerklemmeinheit 5 in der Lenkstellung an der Schaftklemmeinheit **6** arretierbar ist.

Der Arretiermechanismus **20** weist eine durch die Lenkerklemmeinheit **5** gebildete Festlegelasche **21** auf, die sich bei in ihrer Lenkstellung befindlicher Lenkerklemmeinheit **5** seitlich zu der Schaftklemmeinheit **2** bis in einen heckseitigen Bereich der Schaftklemmeinheit **2** erstreckt und die auf einer Seite der vertikalen Längsmittelebene des Lenkervorbaus **1** angeordnet ist, die einer Seite der vertikalen Längsmittelebene des Lenkervorbaus **1** gegenüberliegt, auf der die Schwenkachse **42** angeordnet ist. Insbesondere endet die Festlegelasche **21** heckseitig bündig mit den heckseitigen Endabschnitten **3** und **4** der Schaftklemmeinheit **2.** Zudem entspricht eine Breite der Festlegelasche **21** einer Höhe der Schaftklemmeinheit **2.**

Zudem weist der Arretiermechanismus **20** eine Schnellspanneinheit **22** auf, mittels der die Festlegelasche **21** bei in ihrer Lenkstellung befindlicher Lenkerklemmeinheit **5** an der Schaftklemmeinheit **2** festlegbar ist.

Die Schnellspanneinheit weist einen Bolzen **24** auf. Darüber hinaus weist die Schnellspanneinheit **22** einen quer zu den Längsmittelachse des Bolzen **24** verlaufenden Verbindungsschaft **38** auf, über den ein weiterer Bolzen mit dem Bolzen **24** verbunden ist und der durch eine heckseitig und längsseitig offene horizontale Aussparung **40** an einem durch die beiden heckseitigen Endabschnitte **3** und **4** der Schaftklemmeinheit **2** gebildeten Heckanschnitt der Schaftklemmeinheit **2** hindurchgeführt werden kann.

Zudem weist die Schnellspanneinheit **22** einen Schnellspannhebel **25** auf. An der Festlegelasche **21** der Lenkerklemmeinheit **5** ist eine in der Höhenrichtung des Lenkervorbaus **1** verlaufende Vertiefung ausgebildet, in die ein Sicherungsbauteil **30** eingesetzt ist, in das ein Spannabschnitt des Schnellspannhebels **25** bei in ihrer Lenkstellung befindlichen Lenkerklemmeinheit **5** und bei Arretierung der Lenkerklemmeinheit **5** in der Lenkstellung eingreift.

Der Haltevorsprung **43** ist auf derselben Seite einer vertikalen Querebene des Lenkervorbaus **1** angeordnet wie die Schwenkachse **42,** wobei die Querebene die Längsmittelachse 18 des Lenkervorbaus 1 enthält bzw. durch diese verläuft. Der Haltevorsprung 43 kann insoweit auch als frontseitiger Haltevorsprung bezeichnet werden, da er in Fahrrichtung gesehen auf der dem Lenker zugewandten Seite im Vergleich zur Querebene liegt.

Im Sinne der vorliegenden Anmeldung bezeichnet die Querebene vorzugsweise eine vertikale Bezugsebene, die senkrecht zur Längsmittelebene des Lenkervorbaus **1** verläuft und diesen quer zur Fahrrichtung durchschneidet. Sie dient insbesondere der lagebezogenen Beschreibung funktionaler Elemente wie der Schwenkachse **42** oder des Haltevorsprungs **43.**

An dem frontseitigen Haltevorsprung **43** ist ein in der Höhenrichtung des Lenkervorbaus **1** bewegliches, kugelförmiges Druckstück **44** angeordnet, mittels dem die Lenkerklemmeinheit **5** in der Parkstellung arretiert wird. Das Druckstück **44** ist unverlierbar in einem zylinderförmigen Gehäuse **45** aufgenommen, in dem zudem ein Federelement angeordnet, mit dem das Druckstück **44** in die Arretierstellung vorgespannt ist. Das Gehäuse **45** ist in einer vertikalen Bohrung **46** an dem frontseitigen Haltevorsprung **43** angeordnet, beispielsweise eingepresst.

### Bezugszeichenliste

- 1: Lenkervorbau
- 2: Schaftklemmeinheit
- 3: Endabschnitt von 2
- 4: Endabschnitt von 2
- 5: Lenkerklemmeinheit
- 6: Basisteil von 5
- 7: Lenkerklemmteil von 5
- 8: Stutzen
- 9: Vorsprung von 6
- 10: Durchbrechung an 7
- 11: Höhenverstellungsskala
- 12: Basisteil von 7
- 13: Schraube von 5
- 14: Klemmteil von 7
- 15: Klemmspalt an 12
- 16: Schwenkmechanismus
- 17: Befestigungsschraube
- 18: Längsmittelachse
- 19: Schaftklemmbohrung
- 20: Arretiermechanismus
- 21: Festlegelasche
- 22: Schnellspanneinheit
- 24: Bolzen
- 25: Schnellspannhebel
- 30: Sicherungsbauteil
- 38: Verbindungsschaft
- 40: Aussparung an 2
- 42: Schwenkachse
- 43: Haltevorsprung
- 44: Druckstück
- 45: Gehäuse
- 57: Verbindungssteg
- 68: Fahrrad
- 69: Lenker (versehen mit einem erfindungsgemäßen Lenkervorbau)
- 70: Lenkeraufnahmeöffnung
- 71: Hülse zur Aufnahme der Schwenkachse
- 72: Bohrung zur Aufnahme der Schwenkachse
- 73: Lenker (versehen mit einem aus dem Stand der Technik bekannten Lenkervorbau)
- 75: Schenkel
- 77: Verstellachse
- α: Neigungswinkel
- β: Lenkwinkel

## Patentansprüche

1. Lenkervorbau (1), insbesondere für ein Fahrrad (68), aufweisend wenigstens eine an einem Gabelschaft des Fahrrads (68) festklemmbare Schaftklemmeinheit (2), wenigstens eine an einem Lenker (69) des Fahrrads (68) festklemmbare Lenkerklemmeinheit (5), und wenigstens einen Schwenkmechanismus (16), mittels dem die Lenkerklemmeinheit (5) um eine Schwenkachse (42) zwischen einer Lenkstellung und einer Parkstellung verschwenkbar mit der Schaftklemmeinheit (2) verbunden ist,
**dadurch gekennzeichnet, dass**
die Schwenkachse (42) gegenüber einer Längsmittelachse (18) einer Schaftklemmbohrung (19) der Schaftklemmeinheit (2) in Richtung einer Lenkeraufnahmeöffnung (70) der Lenkerklemmeinheit (5) geneigt ausgebildet ist.

2. Lenkervorbau (1) nach Anspruch 1,
**dadurch gekennzeichnet, dass**
die Schwenkachse (42) im Wesentlichen parallel zu einer bezüglich einer Höhenrichtung des Lenkervorbaus (1) gegebenen vertikalen Längsmittelebene des Lenkervorbaus (1) angeordnet ist.

3. Lenkervorbau (1) nach Anspruch 1 oder Anspruch 2,
**dadurch gekennzeichnet, dass**
die Schwenkachse (42) eine Neigung von α = 3° bis α = 30° aufweist, vorzugsweise eine Neigung von α = 5° bis α = 20°, stärker bevorzugt eine Neigung von α = 8° bis α = 15°, insbesondere eine Neigung von α = 10°.

4. Lenkervorbau (1) nach Anspruch 3
**dadurch gekennzeichnet, dass** die Schwenkachse (42) und die Längsmittelachse (18) der Schaftklemmbohrung (19) den Neigungswinkel *α* einschließen, wenn sie auf eine seitlich des Lenkervorbaus (1) angeordnete Fläche projiziert werden.

5. Lenkervorbau (1) nach einem der vorhergehenden Ansprüche,
**dadurch gekennzeichnet, dass**
der Schwenkmechanismus (16), derart ausgebildet ist, dass die Schwenkachse (42) in zwei voneinander beabstandete Bohrungen (72) der Lenkklemmeinheit (5) und einer zwischen den Bohrungen (72) angeordneten Hülse (71) der Schaftklemmeinheit (2) aufgenommen und mit zwei Befestigungsschrauben (17) verschraubt wird, wobei die Neigung der Schwenkachse (42) durch die Formgebung und Ausrichtungen der Bohrungen (72) sowie der Hülse (71) definiert wird.

6. Lenkervorbau (1) nach Anspruch 5,
**dadurch gekennzeichnet, dass**
die Schaftklemmeinheit (2) einen Haltevorsprung (43) aufweist, der in einem Winkel von 90° + α relativ zur Längsmittelachse (18) ausgerichtet ist,
wobei die Hülse (71) durch eine im Haltevorsprung (43) angeordnete Bohrung bereitgestellt wird, deren Bohrungsachse senkrecht zur Ober- und Unterseite des Haltevorsprungs (43) verläuft, und wobei die Bohrungen (72) der Lenkerklemmeinheit (5) jeweils in zwei voneinander beabstandeten Schenkel (75) der Lenkerklemmeinheit (5) angeordnet sind, deren gegenüberliegende Innenflächen parallel zueinander sowie parallel zur Ober- und Unterseite des Haltevorsprungs (43) verlaufen, wobei die Bohrungsachsen der Bohrungen (72) senkrecht zu den Seitenflächen der Schenkel (75) verlaufen.

7. Lenkervorbau (1) nach einem der vorhergehenden Ansprüche,
**dadurch gekennzeichnet, dass**
die geneigte Schwenkachse (42) von einer Höhenverstellung des Lenkers (69) über eine Verstellachse (77) entkoppelt ist, sodass der Lenker (69) relativ zur Schwenkachse (42) verstellbar ist.

8. Lenkervorbau (1) nach einem der vorhergehenden Ansprüche 1 - 7,
**dadurch gekennzeichnet, dass**
die Lenkerklemmeinheit (5) und die Schaftklemmeinheit (2) als zwei separate Bauteile ausgebildet sind, die über den Schwenkmechanismus (16) miteinander gekoppelt sind, wobei die Lenkerklemmeinheit (5) eine Verstellachse (77) zur Höhenverstellung des Lenkers (69) umfasst.

9. Fahrrad (68) umfassend einen Lenkervorbau (1) nach einem der vorhergehenden Ansprüche.

10. Verfahren zum Überführen eines Fahrrads (68) gemäß Anspruch 9 von einer Fahrposition in eine Parkposition, **dadurch gekennzeichnet, dass** es folgende Schritte umfasst:
- Lösen eines Schnellspannhebels (25),
- Verschwenken des Lenkers (69) um eine geneigte Schwenkachse (42) aus einer Lenkstellung in eine Parkstellung
- Feststellen des Schnellspannhebels (25).

## Claims

1. A handlebar stem (1), in particular for a bicycle (68), comprising at least one steerer clamping unit (2) clampable to a fork steerer of the bicycle (68), at least one handlebar clamping unit (5) clampable to a handlebar (69) of the bicycle (68), and at least one pivot mechanism (16), by means of which the handlebar clamping unit (5) is connected to the steerer clamping unit (2) so as to be pivotable about a pivot axis (42) between a steering position and a parking position,
**characterised in that**
the pivot axis (42) is inclined relative to a longitudinal centre axis (18) of a steerer clamping bore (19) of the steerer clamping unit (2) towards a handlebar receiving opening (70) of the handlebar clamping unit (5).

2. The handlebar stem (1) according to claim 1,
**characterised in that**
the pivot axis (42) is arranged substantially parallel to a vertical longitudinal median plane of the handlebar stem (1), defined with respect to a height direction of the handlebar stem (1).

3. The handlebar stem (1) according to claim 1 or claim 2,
**characterised in that**
the pivot axis (42) has an inclination of α = 3° to α = 30°, preferably an inclination of α = 5° to α = 20°, more preferably an inclination of α = 8° to α = 15°, in particular an inclination of α = 10°.

4. The handlebar stem (1) according to claim 3,
**characterised in that**
the pivot axis (42) and the longitudinal centre axis (18) of the steerer clamping bore (19) enclose the inclination angle α when projected onto a surface arranged laterally of the handlebar stem (1).

5. The handlebar stem (1) according to any one of the preceding claims,
**characterised in that**
the pivot mechanism (16) is configured such that the pivot axis (42) is received in two spaced-apart bores (72) of the handlebar clamping unit (5) and in a sleeve (71) of the steerer clamping unit (2) arranged between the bores (72), and is secured by two fastening screws (17), wherein the inclination of the pivot axis (42) is defined by the shaping and orientations of the bores (72) and of the sleeve (71).

6. The handlebar stem (1) according to claim 5,
**characterised in that**
the steerer clamping unit (2) has a retaining projection (43) oriented at an angle of 90° + α relative to the longitudinal centre axis (18),
wherein the sleeve (71) is provided by a bore arranged in the retaining projection (43), the bore axis of which extends perpendicular to the upper and lower sides of the retaining projection (43), and wherein the bores (72) of the handlebar clamping unit (5) are respectively arranged in two spaced-apart legs (75) of the handlebar clamping unit (5), the opposing inner surfaces of which extend parallel to one another and parallel to the upper and lower sides of the retaining projection (43), wherein the bore axes of the bores (72) extend perpendicular to the side surfaces of the legs (75).

7. The handlebar stem (1) according to any one of the preceding claims,
**characterised in that**
the inclined pivot axis (42) is decoupled from height adjustment of the handlebar (69) via an adjustment axis (77), such that the handlebar (69) is adjustable relative to the pivot axis (42).

8. The handlebar stem (1) according to any one of the preceding claims 1 to 7,
**characterised in that**
the handlebar clamping unit (5) and the steerer clamping unit (2) are formed as two separate components coupled to one another via the pivot mechanism (16), wherein the handlebar clamping unit (5) comprises an adjustment axis (77) for height adjustment of the handlebar (69).

9. A bicycle (68) comprising a handlebar stem (1) according to any one of the preceding claims.

10. A method for transferring a bicycle (68) according to claim 9 from a riding position to a parking position, **characterised in that** it comprises the following steps:
- releasing a quick-release lever (25),
- pivoting the handlebar (69) about an inclined pivot axis (42) from a steering position to a parking position,
- locking the quick-release lever (25).

## Revendications

1. Potence de guidon (1), en particulier pour une bicyclette (68), comprenant au moins une unité de serrage de pivot (2) pouvant être serrée sur un pivot de fourche de la bicyclette (68), au moins une unité de serrage de guidon (5) pouvant être serrée sur un guidon (69) de la bicyclette (68), et au moins un mécanisme de pivotement (16), au moyen duquel l'unité de serrage de guidon (5) est reliée à l'unité de serrage de pivot (2) de manière à pouvoir pivoter autour d'un axe de pivotement (42) entre une position de direction et une position de stationnement,
**caractérisée en ce que**
l'axe de pivotement (42) est incliné par rapport à un axe médian longitudinal (18) d'un alésage de serrage de pivot (19) de l'unité de serrage de pivot (2) en direction d'une ouverture de réception de guidon (70) de l'unité de serrage de guidon (5).

2. Potence de guidon (1) selon la revendication 1,
**caractérisée en ce que**
l'axe de pivotement (42) est disposé sensiblement parallèlement à un plan médian longitudinal vertical de la potence de guidon (1), défini par rapport à une direction de hauteur de la potence de guidon (1).

3. Potence de guidon (1) selon la revendication 1 ou la revendication 2,
**caractérisée en ce que**
l'axe de pivotement (42) présente une inclinaison de α = 3° à α = 30°, de préférence une inclinaison de α = 5° à α = 20°, plus préférentiellement une inclinaison de α = 8° à α = 15°, en particulier une inclinaison de α = 10°.

4. Potence de guidon (1) selon la revendication 3,
**caractérisée en ce que**
l'axe de pivotement (42) et l'axe médian longitudinal (18) de l'alésage de serrage de pivot (19) forment l'angle d'inclinaison α lorsqu'ils sont projetés sur une surface disposée latéralement à la potence de guidon (1).

5. Potence de guidon (1) selon l'une quelconque des revendications précédentes, **caractérisée en ce que**
le mécanisme de pivotement (16) est conçu de telle sorte que l'axe de pivotement (42) est reçu dans deux alésages (72) espacés l'un de l'autre de l'unité de serrage de guidon (5) et dans une douille (71) de l'unité de serrage de pivot (2) disposée entre les alésages (72), et est fixé par vissage au moyen de deux vis de fixation (17), l'inclinaison de l'axe de pivotement (42) étant définie par la forme et les orientations des alésages (72) ainsi que de la douille (71).

6. Potence de guidon (1) selon la revendication 5,
**caractérisée en ce que**
l'unité de serrage de pivot (2) présente une saillie de maintien (43) orientée selon un angle de 90° + α par rapport à l'axe médian longitudinal (18),
la douille (71) étant formée par un alésage disposé dans la saillie de maintien (43), dont l'axe s'étend perpendiculairement aux faces supérieure et inférieure de la saillie de maintien (43), et les alésages (72) de l'unité de serrage de guidon (5) étant respectivement disposés dans deux branches (75) espacées l'une de l'autre de l'unité de serrage de guidon (5), dont les surfaces intérieures opposées s'étendent parallèlement l'une à l'autre ainsi que parallèlement aux faces supérieure et inférieure de la saillie de maintien (43), les axes des alésages (72) s'étendant perpendiculairement aux surfaces latérales des branches (75).

7. Potence de guidon (1) selon l'une quelconque des revendications précédentes, **caractérisée en ce que**
l'axe de pivotement incliné (42) est découplé d'un réglage en hauteur du guidon (69) par l'intermédiaire d'un axe de réglage (77), de sorte que le guidon (69) est réglable par rapport à l'axe de pivotement (42).

8. Potence de guidon (1) selon l'une quelconque des revendications précédentes 1 à 7, **caractérisée en ce que**
l'unité de serrage de guidon (5) et l'unité de serrage de pivot (2) sont réalisées sous la forme de deux éléments distincts couplés l'un à l'autre par l'intermédiaire du mécanisme de pivotement (16), l'unité de serrage de guidon (5) comprenant un axe de réglage (77) pour le réglage en hauteur du guidon (69).

9. Bicyclette (68) comprenant une potence de guidon (1) selon l'une quelconque des revendications précédentes.

10. Procédé pour faire passer une bicyclette (68) selon la revendication 9 d'une position de conduite à une position de stationnement, **caractérisé en ce que** il comprend les étapes suivantes :
- desserrer un levier de serrage rapide (25),
- faire pivoter le guidon (69) autour d'un axe de pivotement incliné (42) depuis une position de direction vers une position de stationnement,
- bloquer le levier de serrage rapide (25).
